# EUROPEAN PATENT SPECIFICATION

(11) **EP 1 487 179 B1**
(45) Date of publication and mention of the grant of the patent: **15.08.2007**
(21) Application number: 04252820.8
(22) Date of filing: 14.05.2004
(51) Int. Cl.: H04L 29/08

(54) **Method and apparatus for dependency resolution for client-initiated download**
Verfahren und Einrichtung zur Abhängigkeitsauflösung von Client angefragten Ladevorgang
Procédé et appareil pour des résolutions de dépendances dans des téléchargements initalisés par client

(30) Priority: 09.06.2003 US 458001
(43) Date of publication of application: 15.12.2004
(73) Proprietor: SUN MICROSYSTEMS, INC., Santa Clara, CA 95054 (US)
(72) Inventor: Veselov, Pavel S, San Jose, California 95136 (US); Bowen, David L, Palo Alto, California 94301 (US)
(74) Representative: Collins, John David

(56) References cited:
- US-A1- 2002 129 129
- US-A1- 2003 079 057
- I H WITTEN ET AL.: "The Greenstone Plugin Architecture" JCDL02, 17 June 2002 (2002-06-17), pages 285-286, XP002325236 PORTLAND,OR,USA Retrieved from the Internet: URL:http://delivery.acm.org/10.1145.pdf> [retrieved on 2005-04-15]
- I H WITTEN: "Examples of Practicla Digital Libraries" D-LIB MAGAZINE, vol. 9, no. 3, March 2003 (2003-03), pages 1-14, XP002325237 UNKNOWN Retrieved from the Internet: URL:http://www.dlib.org/dlib/march03/witte n/03witten.html> [retrieved on 2005-04-15]

## Description

### BACKGROUND OF THE INVENTION

### 1. Field of the Invention

The present invention relates generally to downloading digital content, and more specifically to supporting dependencies associated with the downloading of the additional content.

### 2. Description of the Related Art

An abundance of digital content is available for downloading with the advent of the Internet and the popularity of mobile computational devices. Currently, a user may be notified that a particular plug-in is needed to play a certain MIME type. For example, a browser may generate a window indicating that a particular plug-in, e.g., a viewer such as REAL ONE, is required for the presentation of digital video content. However, the mechanism by which the browser maps a MIME type to a plug-in is determined by the browser vendor, and not the content developer.

Generic download protocols for provisioning applications and content to a user's system that are currently in use, lack the ability to determine all the dependencies needed to run the desired digital content to be downloaded. As the content available for downloading becomes more sophisticated, the requirements to run the content typically demand more than the installation of one plug-in. For example, a shared library or any other suitable entity or code required for execution of the digital content may be required, in addition to a viewer plug-in. Furthermore, the additional entities may be linked to other entities which must also be downloaded. That is, a chain of entities may be required for the execution of the desired content. The currently available downloading protocols are not capable of identifying each of the entities in the chain and as such are incapable of automatically downloading each entity of the chain.

In light of the foregoing, it is desired to implement a scheme to enable a download protocol to identify multiple dependencies for digital content to be downloaded, as well as presenting the user with an option to download the complete set (transitive closure) of dependencies as a single transaction.

US 2002/0129129 (Bloch et al) describes a system for deploying applications over a distributed network to web enabled devices. An application assembler downloads and installs on each web enabled device. The application assembler downloads one or more text files from the server, retrieves program logic from each of the downloaded text files and assembles the retrieved program logic into a functioning application. In some instances, a plugin that is downloaded and installed on each web enabled device is activated by webpages on the server to launch the application assembler.

### SUMMARY OF THE INVENTION

Broadly speaking, the present invention provides a scheme for accommodating multiple dependencies associated with the downloading of digital content. The present invention can be implemented in numerous ways, including as a process, an apparatus, a system, a device, or a method. Several embodiments of the present invention are described below.

According to a first aspect of the present invention, there is provided, a method for downloading digital content, comprising: identifying data describing the digital content, identifying a dependency related to execution of the digital content from the data describing the digital content, determining if an entity associated with the dependency related to the execution of the digital content is locally available, determining if any additional dependency related to the execution of the digital content is needed, if the entity is not locally available and any additional dependency is needed, the method includes, obtaining both the entity from an address provided by the data describing the digital content and an entity associated with the any additional dependency, and determining if a receiver of the digital content has an acceptable capacity for the entity and the entity associated with the any additional dependency.

According to a further aspect of the present invention, there is provided, a computer readable medium having program instructions for downloading digital content, comprising: program instructions for identifying data describing the digital content, program instructions for identifying a dependency related to execution of the digital content from the data describing the digital content, program instructions for determining if a downloadable entity associated with the dependency related to the execution of the digital content is locally available, program instructions for determining if any additional dependency related to the execution of the digital content is needed, program instructions for obtaining both the downloadable entity from an address provided by the data describing the digital content and a downloadable entity associated with the any additional dependency, if the downloadable entity is not locally available and any additional dependency is needed, and program instructions for determining if a receiver of the digital content has an acceptable capacity for the downloadable entity and the downloadable entity associated with the any additional dependency.

According to another aspect of the invention, there is provided, a system, comprising: a server configured to provide digital content, a client configured to receive the digital content from the server the client configured to identify a descriptor containing a list of dependencies for executing the digital content prior to receiving the digital content, the client further configured to extract additional dependencies from the descriptor, the descriptor including addresses for a package corresponding to each of the dependencies and the additional dependencies so that the client may obtain each package from the corresponding addresses, wherein the client includes logic for determining if the client has an acceptable capacity for all packages.

Other aspects and advantages of the invention will become apparent from the following detailed description, taken in conjunction with the accompanying drawings, illustrating by way of example the principles of the invention.

### BRIEF DESCRIPTION OF THE DRAWINGS

The accompanying drawings, which are incorporated in and constitute part of this specification, illustrate exemplary embodiments of the invention and together with the description serve to explain the principles of the invention.
Figure 1 is a simplified schematic diagram of a package of data in accordance with one embodiment of the invention.
Figure 2 is an alternative embodiment of the package described in Figure 1.
Figure 3 is a simplified schematic diagram of interrelated packages in accordance with one embodiment of the invention.
Figure 4 is a simplified schematic illustrating the downloading of an exemplary service in accordance with one embodiment of the invention.
Figure 5 is a schematic diagram illustrating an exemplary service which may be downloaded and the associated dependencies in accordance with one embodiment of the invention.
Figure 6 is a flowchart diagram illustrating the method operations for downloading a package having multiple dependencies in accordance with one embodiment of the invention.
Figure 7 is a flowchart diagram illustrating the method operations for a client in resolving dependencies associated with a package being downloaded in accordance with one embodiment of the invention.

### DETAILED DESCRIPTION OF THE PREFERRED EMBODIMENTS

An invention is described for a system, device and method for identifying dependencies associated with digital content to be downloaded and for providing access to the dependencies. It will be obvious, however, to one skilled in the art, that the present invention may be practiced without some or all of these specific details. In other instances, well known process operations have not been described in detail in order not to unnecessarily obscure the present invention.

The embodiments of the present invention provide a method and a system for enabling network users to more effectively download digital content. The system defines a client server relationship for the downloading of digital content over a distributed network. In one embodiment, a generic download protocol is extended to accommodate multiple dependencies associated with the digital content execution. In addition, the protocol extension is capable of accepting multiple dependencies configured in a chain relationship as described below. In one embodiment, the scheme described herein performs a logical evaluation prior to downloading digital content. Initially the scheme obtains meta data describing the content which identifies what dependencies must be satisfied in order to use the content. Thus, the scheme executes logical inferences to determine whether all the dependencies can be met and what system resources, e.g., memory capacity, etc., are required for the content.

As used herein, the term package is a separately provisional (downloadable) entity. A package is either downloaded in whole, or not downloaded at all. The package is generally represented by a single descriptor and one or more objects. Every package has the following attributes: A package name, which is an assigned package name or identification (id), and a package version, which is a version of the package. From the client perspective, packages that serve different purposes have different names. Two different packages may have the same name, but the two different packages are identifiable as two different versions, where one version is an upgrade for another version.

The term object as used herein is an atomic entity as identified by a device. One or more objects may form a package. For example, a movie file is an object, or a calendar application is an object. An object may be graded into different types as described below. For example, an object may be graded as an application, which refers to an interactive application. The application appears to a user through a graphical user interface (GUI), so a user can start, stop, and interact with the application in other ways. The object may be graded as a service also. A service is a set of bits that are registered within the client system and provide exports. These exports can be found by other applications or services, so they may use this service. For example, a utility accounting service may expose application programming interfaces (APIs) for an application to call when it is started, or a graphics library, when registered, that gives access to some useful functions that the accounting service provides. It should be appreciated that this configuration enables the flexibility to have two different services provide by two different developers, with different names to expose the same functionality by exposing the same export. Additionally, the object may be graded as a player. A player is an executable, but may only be started if a certain package is supplied to it. Usually, a player associates one or a more multipurpose Internet mail extensions (MIME) types and one or a more operations the player may perform on a MIME type. It will be apparent to one skilled in the art that a player may also be an application at the same time in accordance with one embodiment of the invention, e.g., if the player also has its own user interface (UI). As is generally known, a MIME is an industry standard for categorizing the content types of files.

The term data as used herein refers to an arbitrary data, usually identified by a location and a MIME type. A data may be provisioned (downloaded) locally, or be referred to from outside network. In one embodiment, in order for a download protocol to support dependencies, the downloadable entity is represented in the terms defined above, or a client code must be able to compile this information off a legacy download protocol.

A package may have zero to any dependencies specified with it. A dependency may be a requirement or a request. If any of a requirement dependencies is not satisfied, then package will not run on a user's device, e.g., a Motion Picture Expert Group (MPEG) file will not run on a user's device without a suitable MPEG player. The request dependencies do not have to be satisfied in order to run the package, but the package may find use for the entities specified in those request dependencies. For example, a messaging services that requests an audio library to play alert notifications, but the audio library is unavailable or missing, will result in the messaging service still running, but silently.

In one embodiment, a dependency may be requested on three different entities, i.e., a package, an exported entity, and a MIME type player. With respect to a specific package, requesting a specific package name, and a package version pattern will satisfy the dependency. For example, package "B: depends on package "A", version "2.*", meaning that any version that starts with 2 will suffice. On an exported entity, there must be a service that exports that entity, in order to satisfy this dependency. On a MIME type player, if a dependency is on a certain MIME type player, or on a certain MIME type and action, a player that can handle this MIME type is installed in order to satisfy that dependency.

In all three cases listed above, there is set of different attributes for each dependency type defined. In one case, its referenced name and version, in another case its a MIME type, and so on. All of those three types may bear an additional attribute, that, if present, should represent the location where this dependency may be resolved. The location information heavily depends on the actual download specification employed, the back end server capabilities and so forth. For example, if there is Open Mobile Alliance (OMA) download protocol involved, and the client is capable of processing an HTML file with references to a few OMA descriptors, then this location may be either an uniform resource identifier (URI) to an OMA descriptor, that has this specific package, or an URI to a HTML page that in its turn contains a reference to a descriptor that satisfies that dependency. It will be apparent to one skilled in the art that one exemplary download specification that the embodiments described herein may be utilized with is the OMA generic content download specification.

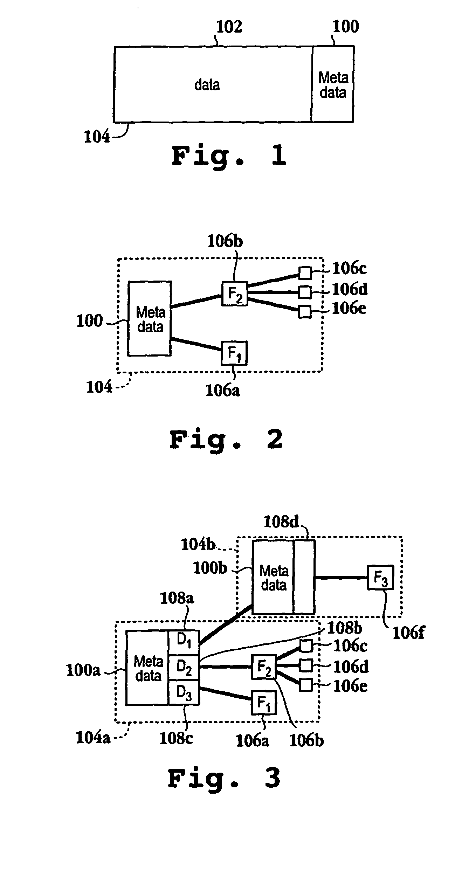

Figure 1 is a simplified schematic diagram of a package of data in accordance with one embodiment of the invention. Here, package 104 includes data region 102 and meta data region 100. It should be appreciated that meta data region 100 includes data which defines the contents of data region 102. That is, meta data region 100 includes data that describes the data contained in region 102. For example, meta data region 100 may include data that indicates a size associated with data region 102, a description of the type of data found in data region 102, additional files associated with the data, etc. As will be explained in more detail below, the meta data may include pointers additional files associated with the data and pointers to meta data for additional packages associated with the data.

Figure 2 is an alternative embodiment of the package described in Figure 1. Here, package 104 includes meta data 100 which includes pointers to various files. For example, meta data 100 points to files F₁ 106a and F₂ 106b. In turn, F₂ 106b includes pointers to additional files 106c through 106e. Data files 106a through 106e correspond to the data within data region 102 of Figure 1. Here, meta data 100 may point to files that are necessary to execute the digital content to be downloaded through dependencies as discussed below.

Figure 3 is a simplified schematic diagram of interrelated packages in accordance with one embodiment of the invention. Here, packages 104a and 104b are interrelated through dependency 108a. It should be appreciated that meta data 100a is associated with dependencies D1, D2, and D3, 108a through 108c, respectively. Dependency D1 108a points to package 104b. Package 104b includes meta data 100b having dependency 108d which is associated with file F₃ 106f. Dependency D2 108b points to file F₂ 106b which is associated with additional files 106c through 106e. Dependency D3 108c points to file F₁ 106a. It should be appreciated that where a system lacks a certain player, e.g., a user may desire to play MP3's, however, the system may not have an MP3 player, therefore, a MP3 player must be downloaded. Thus, through the embodiments described herein, a provisionable entity is enabled to be downloaded for playing the MP3's. However, as part of the MP3 package an additional package or additional files may be necessary for execution. For example, dependencies D2 through D3 will point to additional files associated with meta data 100 while dependency D1 108a will point to an additional package that is necessary. For example, a certain library may be required. Accordingly, any package may be associated with multiple dependencies. Additionally, the package may be associated with multiple other packages. While a single package is illustrated being associated with one other package in Figure 3, it should be appreciated that package 104b may be associated with one or more other packages and so on and so forth. As will be explained further below, dependencies D1 through D4 108a through 108b, respectively, may include location data, e.g., uniform resource locator (URL), uniform resource identifier, (URI), etc., as to where to download the associated files from. For example, a player may be associated with a MIME that may be accessed from a centralized location. It will be apparent to one skilled in the art that industry standards have been set and applied in order to make MIME's readily available.

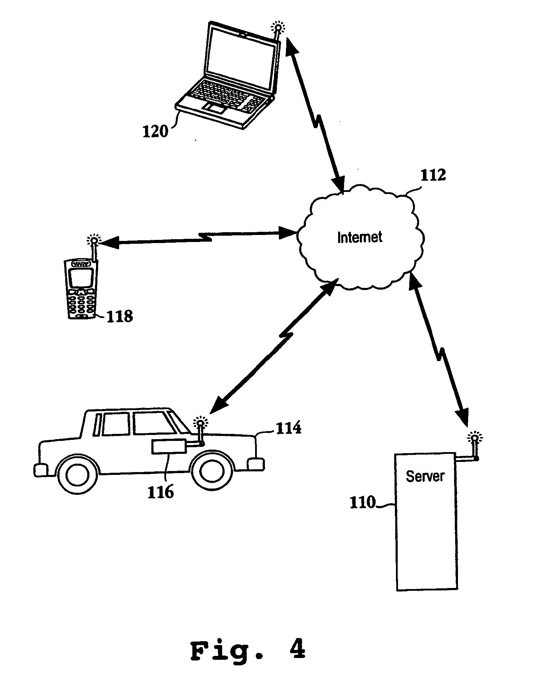

Figure 4 is a simplified schematic illustrating the downloading of an exemplary service in accordance with one embodiment of the invention. It should be appreciated that the embodiments described herein enable the downloading of provisionable applications and the associated content to a user's system through dependencies which may be changed or where multiple dependencies are associated with a single package. Thus, through generic download protocols that support the dependencies as described herein. users of mobile and non-mobile devices will be able to efficiently access and download digital content. Mobile devices, e.g., laptop 120, cellular phone 118, vehicle 114, etc. may be in communication with a distributed network such as the Internet 112 over a wired or wireless connection. Server 110 is also in communication with Internet 112. It should be appreciated that while Figure 4 illustrate wireless connections, the invention is not limited to wireless connections as wired connections may also be employed with the embodiments described herein. Thus, should a user having one of the illustrated mobile devices and desires to download digital content, such as an MP3 or a movie, this functionality is enabled through the extension to a download protocol described herein. That is, if any of the mobile or non-mobile, e.g., desktop computer, devices need an MP3 player or movie player, the appropriate player and associated files may be downloaded through the embodiments described above where meta data is used to determine the files necessary to execute the digital content and the location of these files.

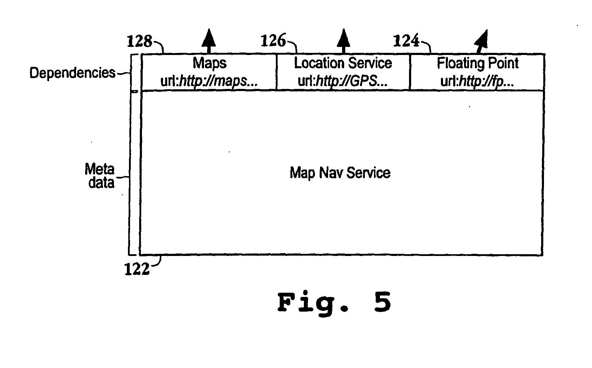

Figure 5 is a schematic diagram illustrating an exemplary service which may be downloaded and the associated dependencies for that service in accordance with one embodiment of the invention. Here, meta data region 122 contains data describing a map navigation service which may be downloaded for a vehicle. The associated dependencies include floating point dependency 124, location service dependency 126 and map dependency 128. Along with each of the dependencies, 124 through 128, a location where the associated file may be obtained is included. With reference to Figure 4, map navigation service may be downloaded into module 116 of vehicle 114. In order to provide map navigation service, dependencies 124, 126 and 128 must be satisfied. Thus, floating point module 124, location service module 126 and map module 128 each of which is provided with a URL address in order to access the data is included. As discussed above, dependencies 124, 126 and 128 may point to additional packages as well as files. It should be appreciated that prior to downloading the digital content, the meta data is downloaded and evaluated in order to determine if the client can run the digital content and obtain the provisionable entities defined by the dependencies.

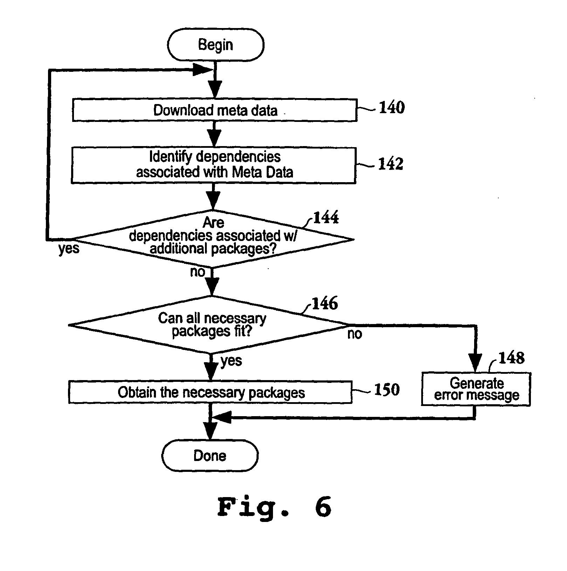

Figure 6 is a flowchart diagram illustrating the method operations for downloading a package having multiple dependencies in accordance with one embodiment of the invention. The method initiates with operation 140 where the meta data is downloaded. It will be apparent to one skilled in the art that the meta data is downloaded in response to a request originated by either a client or a server. For example, a user may request to download a player, etc., or a server may originate a request to download a service to a client. The method then advances to operation 142 where dependencies associated with the meta data are identified. As explained above, dependencies may point to other files or other packages. The method then proceeds to decision operation 144 where it is determined if the dependencies are associated with additional packages. If the dependencies are associated with additional packages, then the method returns to operation 140 and repeats as described above. If the dependencies are not associated with additional packages, then the methods moves to decision operation 146 where it is determined if all the packages can fit on the device. That is, it is determined if the device has enough resources, e.g., memory, to accommodate the packages. If the device does not have enough memory to accommodate the packages, then an error message is generated in operation 148. If all the necessary packages will fit on the device, then the method proceeds to operation 150 where the necessary packages are obtained. Here, the addresses to access the necessary packages may be provided in the dependency data.

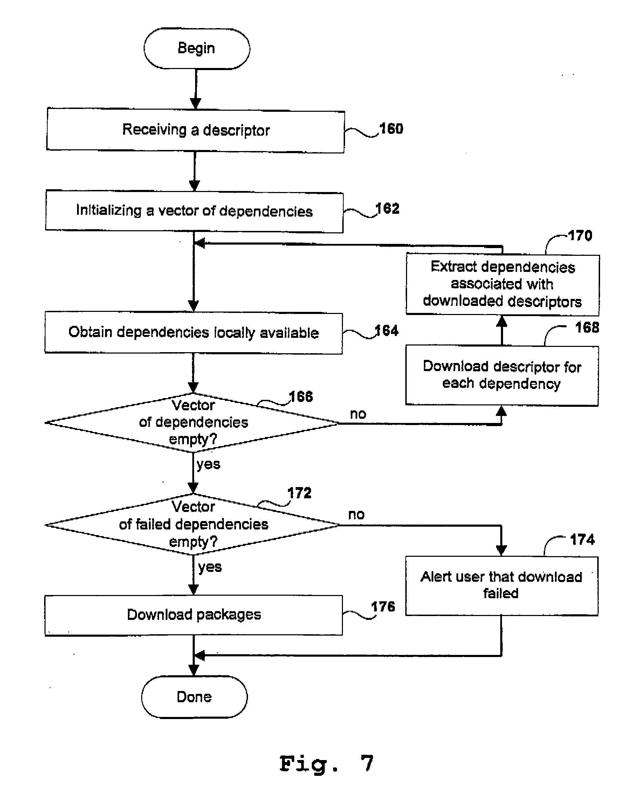

Figure 7 is a flowchart diagram illustrating the method operations executed by a client in resolving dependencies associated with a package being downloaded in accordance with one embodiment of the invention. The method initiates with operation 160 where the client receives a descriptor that contains list of dependencies. It should be appreciated that the client may initiate a request associated with the descriptor in one embodiment. Alternatively, the request may be initiated by the server, e.g., a user may pay for a certain service. The service is then downloaded to the client upon initiation from the server, according to the embodiments described herein. The method then advances to operation 162 where a vector of dependencies is initialized by the client. It should be appreciated that all dependencies to that vector are added here. The client will initialize a vector of descriptors, and add the descriptor to the vector of descriptors in addition to initializing a vector of failed dependencies. The vector of failed dependencies is empty initially. The method then proceeds to operation 164 where the client attempts to satisfy the dependency with a package already installed on the client, i.e., a local package. For example, the client may have a necessary player installed locally, a necessary library installed locally, etc. It should be appreciated that for each dependency satisfied locally, the dependency is removed from the vector of dependencies. The method then advances to decision operation 166 where it is determined if the vector of dependencies is empty. If the vector of dependencies is not empty, the method moves to operation 168, where for each dependency in the vector of dependencies, an attempt to acquire, i.e., download, a descriptor for a package is performed. In one embodiment, the location provided along with the dependency is used to acquire the descriptor. As described with reference to Figures 3 and 5, an address, e.g., URL, URI, etc., may be provided in order to acquire the descriptor.

The method of Figure 7, then advances to operation 170, where for any descriptor that was downloaded during operation 168, any dependencies associated with the corresponding descriptor are extracted. Here, the extracted dependencies are added to the dependency vector. In addition, each descriptor downloaded during operation 168 is added to the vector of descriptors. In one embodiment, if a dependency cannot be resolved, i.e., no descriptor is found externally to satisfy it, the unresolved dependency is removed from the vector of dependencies and added to the vector of failed dependencies. The method then returns to operation 164 and repeats as described above. If the vector of dependencies is empty in decision operation 166, then the method proceeds to decision operation 172 where it is determined if the vector of failed dependencies contains at least one required dependency. If the vector of failed dependencies contains at least one required dependency, then the method moves to operation 174 where the user may be alerted that the download of the application failed. If the vector of failed dependencies does not contain any required dependencies, then the method advances to operation 176 where the packages associated with each of the descriptors found in the vector of descriptors are downloaded.

In summary, the present invention provides a scheme for effectively downloading digital content to a device when the device needs to acquire multiple dependencies associated with executing or presenting the digital cotent. In one embodiment, the scheme is an extension to a generic download protocol. Meta data that describes the package as a whole includes pointers or references to additional descriptors associated with the execution or presentation of the digital content. As described above, through the descriptors, the necessary components associated with the digital content are identified and downloaded so that a user may access the digital content. The digital content may be downloaded to any suitable computational device, e.g., phones, personal digital assistants (PDA), laptop computers, desktop computers, etc. It should be appreciated that the embodiments described herein are not limited to any particular download protocol but may be applied to extending any suitable download protocol. For example, a protocol may have its own limitations that render some of the dependencies and attributes obsolete or not applicable. In these situations, the dependency extension will be limited to the corresponding limitation of the protocol.

With the above embodiments in mind, it should be understood that the invention may employ various computer-implemented operations involving data stored in computer systems. These operations include operations requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

The above described invention may be practiced with other computer system configurations including hand-held devices, microprocessor systems, microprocessor-based or programmable consumer electronics, minicomputers, mainframe computers and the like. The invention may also be practiced in distributing computing environments where tasks are performed by remote processing devices that are linked through a communications network.

The invention can also be embodied as computer readable code on a computer readable medium. The computer readable medium is any data storage device that can store data which can be thereafter read by a computer system. The computer readable medium also includes an electromagnetic carrier wave in which the computer code is embodied. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer system so that the computer readable code is stored and executed in a distributed fashion.

Although the foregoing invention has been described in some detail for purposes of clarity of understanding, it will be apparent that certain changes and modifications may be practiced. Accordingly, the present embodiments are to be considered as illustrative and not restrictive.

## Claims

1. A method for downloading digital content, comprising:
identifying data (100; 100a) describing the digital content (102);
identifying a dependency (108b, 108c) related to execution of the digital content (102) from the data 100,100a) describing the digital content (102);
determining if a downloadable first entity (106a, 106b) associated with the dependency (108b, 108c) related to the execution of the digital content is locally available;
determining if any additional dependency (108a) related to the execution of the digital content (102) is needed;
if the first entity (106a,106b) is not locally available and any additional dependency (108a) is needed obtaining both the first (106a, 106b) from an address provided by the data describing the digital content and a downloadable additional entity (106f) associated with the any additional dependency (108a), and **characterized by**
determining if a receiver (114; 118; 120) of the digital content has an acceptable capacity for the first entity (106a, 106b) and the additional entity (106f) associated with the any additional dependency (108a).

2. The method of claim 1, wherein the execution of the digital content (102) includes the presentation of the digital content.

3. The method of claim 1, wherein the method operation of obtaining both the first entity (106a, 106b) from an address provided by the data (100;100a) describing the digital content and a additional entity (106f) associated with the any additional dependency (108a) includes,
identifying an address for obtaining the additional entity (106f) associated with the any additional dependency (108a) from data describing the additional entity associated with the any additional dependency (100b).

4. The method of claim 1, further comprising:
identifying a locator corresponding to the address.

5. The method of claim 1, wherein if the receiver (114; 118; 120) of the digital content does not have acceptable capacity for the first entity, then the method includes:
generating an error message.

6. The method of claim 1, wherein the data (100; 100a; 122) describing the digital content is a descriptor containing a list of dependencies.

7. The method of claim 1, further comprising:
initializing (162) vectors selected from the group consisting of a vector of dependencies, a vector of descriptors, and a vector of failed dependencies, wherein the vector of dependencies includes both the dependency and the any additional dependency;
acquiring (168) a descriptor for each entity; and
extracting additional descriptors from the descriptor for each entity.

8. A computer readable medium having program instructions for downloading digital content, comprising:
program instructions for identifying data (100; 100a) describing the digital content (102);
program instructions for identifying a dependency (108b, 108c) related to execution of the digital content (102) from the data describing the digital content;
program instructions for determining if a downloadable first entity (106a, 106b) associated with the dependency(108b, 108c) related to the execution of the digital content is locally available;
program instructions for determining if any additional dependency (108a) related to the execution of the digital content is needed;
program instructions for obtaining both the downloadable first entity (106a, 106b) from an address provided by the data describing the digital content and a downloadable additional entity (106f) associated with the any additional dependency (108a), if the downloadable first entity is not locally available and any additional dependency is needed; and **characterized by**
program instructions for determining if a receiver (114; 118; 120) of the digital content has an acceptable capacity for the downloadable first entity (106a, 106b) and the downloadable additional entity (106f) associated with the any additional dependency (108a).

9. The computer readable medium of claim 8, wherein the program instructions for obtaining both the downloadable first entity (106a, 106b) from an address provided by the data (100; 100a;122) describing the digital content and a downloadable additional entity (106f) associated with the any additional dependency(108a) includes,
program instructions for identifying an address for obtaining the downloadable additional entity (106a) associated with the any additional dependency from data describing the downloadable additional entity associated with the any additional dependency (100b),

10. The computer readable medium of claim 8, further comprising:
program instructions for identifying a locator corresponding to the address.

11. The computer readable medium of claim 8, wherein if the receiver (114; 118; 120) of the digital content does not have acceptable capacity for the downloadable first entity, then the computer readable medium includes:
program instructions for generating an error message.

12. The computer readable medium of claim 8, wherein the data (100; 100a; 122) describing the digital content is a descriptor containing a list of dependencies.

13. The computer readable medium of claim 8, further comprising:
program instructions for initializing(162) vectors selected from the group consisting of a vector of dependencies, a vector of descriptors, and a vector of failed dependencies, wherein the vector of dependencies includes both the dependency and the any additional dependency;
program instructions for acquiring (168) a descriptor for each downloadable entity; and
program instructions for extracting additional descriptors from the descriptor for each downloadable entity.

14. A system, comprising:
a server (110) configured to provide digital content (102); a client (114; 118; 120) configured to receive the digital content (102) from the server (110); the client configured to identify a descriptor (100a) containing a list of dependencies (108b, 108c) for executing the digital content (102) prior to receiving the digital content, the client further configured to extract additional dependencies (108a) from the descriptor, the descriptor including addresses for a package corresponding to each of the dependencies (108a, 108b) and the additional dependencies (108a) so that the client may obtain each package from the corresponding addresses, **characterized by** the client includes logic for determining if the client (114; 118; 120) has an acceptable capacity for all packages.

15. The system of claim 14, further comprising:
a distributed network (112) over which the server (110) and the client (114; 118; 120) communicate.

16. The system of claim 14, wherein the client, (114; 118; 120) is a mobile electronic device.

17. The system of claim 14, wherein the logic for determining if the client (114; 118; 120) has an acceptable capacity for all packages includes,
logic for generating an error message indicating that the client (114; 118; 120) is unable to present the digital content (102).

## Patentansprüche

1. Verfahren zum Herunterladen von Digitalinhalt, umfassend:
Identifizieren der den Digitalinhalt (102) beschreibenden Daten (100; 100a);
Identifizieren einer Abhängigkeit (108b, 108c), zusammenhängend mit der Ausführung des Digitalinhalts (102) aus den Daten (100, 100a), die den Digitalinhalt (102) beschreiben;
Bestimmen, ob eine herunterladbare erste Entität (106a, 106b), assoziiert mit der Abhängigkeit (108b, 108c), die mit der Ausführung des Digitalinhalts zusammenhängt, lokal verfügbar ist;
Bestimmen, ob eine zusätzliche Abhängigkeit (108a), die mit der Ausführung des Digitalinhalts (102) zusammenhängt, erforderlich ist;
falls die erste Entität (106a, 106b) nicht lokal verfügbar ist und eine zusätzliche Abhängigkeit (108a) erforderlich ist, das Erhalten sowohl der ersten Entität (106a, 106b) von einer durch die den Digitalinhalt beschreibenden Daten bereitgestellten Adresse als auch einer herunterladbaren zusätzlichen Entität (106f), assoziiert mit der einen zusätzlichen Abhängigkeit (108a), und **gekennzeichnet durch**
Bestimmen, ob ein Empfänger (114; 118; 120) des Digitalinhalts eine annehmbare Kapazität hat für die erste Entität (106a, 106b) und die zusätzliche Entität (106f), assoziiert mit der einen zusätzlichen Abhängigkeit (108a).

2. Verfahren nach Anspruch 1, worin die Ausführung des Digitalinhalts (102) die Präsentation des Digitalinhalts enthält.

3. Verfahren nach Anspruch 1, worin die Verfahrensoperation des Erhaltens sowohl der ersten Entität (106a, 106b) von einer durch die den Digitalinhalt beschreibenden Daten (100; 100a) bereitgestellten Adresse als auch einer zusätzlichen Entität (106f), assoziiert mit der einen zusätzlichen Abhängigkeit (108a), enthält:
Identifizieren einer Adresse zum Erhalten der zusätzlichen Entität (106f), assoziiert mit der einen zusätzlichen Abhängigkeit (108a) von Daten, welche die mit der einen zusätzlichen Abhängigkeit (100b) assoziierte zusätzliche Entität beschreiben.

4. Verfahren nach Anspruch 1, außerdem umfassend:
Identifizieren eines der Adresse entsprechenden Lokalisierers.

5. Verfahren nach Anspruch 1, worin, falls der Empfänger (114; 118; 120) des Digitalinhalts keine annehmbare Kapazität für die erste Entität hat, das Verfahren enthält:
Erzeugen einer Fehlermeldung.

6. Verfahren nach Anspruch 1, worin die den Digitalinhalt beschreibenden Daten (100; 100a; 122) ein Deskriptor sind, der eine Liste der Abhängigkeiten enthält.

7. Verfahren nach Anspruch 1, außerdem umfassend:
Initialisieren (162) von Vektoren, ausgewählt aus der Gruppe, die aus einem Vektor der Abhängigkeiten, einem Vektor der Deskriptoren und einem Vektor der ausgefallenen Abhängigkeiten besteht, worin der Vektor der Abhängigkeiten sowohl die Abhängigkeit also auch die eine zusätzliche Abhängigkeit enthält;
Erfassen (168) eines Deskriptors für jede Entität; und
Extrahieren zusätzlicher Deskriptoren aus dem Deskriptor für jede Entität.

8. Computerlesbares Medium mit Programmbefehlen zum Herunterladen von Digitalinhalt, umfassend:
Programmbefehle zum Identifizieren von den Digitalinhalt (102) beschreibenden Daten (100; 100a);
Programmbefehle zum Identifizieren einer Abhängigkeit (108b, 108c), zusammenhängend mit der Ausführung des Digitalinhalts (102) aus den Daten, die den Digitalinhalt beschreiben;
Programmbefehle zum Bestimmen, ob eine herunterladbare erste Entität (106a, 106b), assoziiert mit der Abhängigkeit (108b, 108c), die mit der Ausführung des Digitalinhalts zusammenhängt, lokal verfügbar ist;
Programmbefehle zum Bestimmen, ob eine zusätzliche Abhängigkeit (108a), die mit der Ausführung des Digitalinhalts zusammenhängt, erforderlich ist;
Programmbefehle zum Erhalten sowohl der herunterladbaren ersten Entität (106a, 106b) von einer durch die den Digitalinhalt beschreibenden Daten bereitgestellten Adresse als auch einer herunterladbaren zusätzlichen Entität (106f), assoziiert mit der einen zusätzlichen Abhängigkeit (108a), falls die herunterladbare erste Entität nicht lokal verfügbar ist und eine zusätzliche Abhängigkeit erforderlich ist; und **gekennzeichnet durch**
Programmbefehle zum Bestimmen, ob ein Empfänger (114; 118; 120) des Digitalinhalts eine annehmbare Kapazität hat für die herunterladbare erste Entität (106a, 106b) und die herunterladbare zusätzliche Entität (106f), assoziiert mit der einen zusätzlichen Abhängigkeit (108a).

9. Computerlesbares Medium nach Anspruch 8, worin die Programmbefehle zum Erhalten sowohl der herunterladbaren ersten Entität (106a, 106b) von einer durch die den Digitalinhalt beschreibenden Daten (100; 100a; 122) bereitgestellten Adresse als auch einer herunterladbaren zusätzlichen Entität (106f), assoziiert mit der einen zusätzlichen Abhängigkeit (108a), enthalten:
Programmbefehle zum Identifizieren einer Adresse zum Erhalten der herunterladbaren zusätzlichen Entität (106a), assoziiert mit der einen zusätzlichen Abhängigkeit (108a) von Daten, die die mit der einen zusätzlichen Abhängigkeit (100b) assoziierte herunterladbare zusätzliche Entität beschreiben.

10. Computerlesbares Medium nach Anspruch 8, außerdem umfassend:
Programmbefehle zum Identifizieren eines der Adresse entsprechenden Lokalisierers.

11. Computerlesbares Medium nach Anspruch 8, worin, falls der Empfänger (114; 118; 120) des Digitalinhalts keine annehmbare Kapazität für die herunterladbare erste Entität hat, das computerlesbare Medium enthält:
Programmbefehle zum Erzeugen einer Fehlermeldung.

12. Computerlesbares Medium nach Anspruch 8, worin die den Digitalinhalt beschreibenden Daten (100; 100a; 122) ein Deskriptor sind, der eine Liste der Abhängigkeiten enthält.

13. Computerlesbares Medium nach Anspruch 8, außerdem umfassend:
Programmbefehle zum Initialisieren (162) von Vektoren, ausgewählt aus der Gruppe, die aus einem Vektor der Abhängigkeiten, einem Vektor der Deskriptoren und einem Vektor der ausgefallenen Abhängigkeiten besteht, worin der Vektor der Abhängigkeiten sowohl die Abhängigkeit also auch die eine zusätzliche Abhängigkeit enthält;
Programmbefehle zum Erfassen (168) eines Deskriptors für jede herunterladbare Entität; und
Programmbefehle zum Extrahieren zusätzlicher Deskriptoren aus dem Deskriptor für jede herunterladbare Entität.

14. System, umfassend:
einen Server (110), konfiguriert zum Bereitstellen von Digitalinhalt (102);
einen Client (114; 118; 120), konfiguriert zum Empfangen des Digitalinhalts (102) vom Server (110); der Client ist zum Identifizieren eines Deskriptors (100a) konfiguriert, der eine Liste von Abhängigkeiten (108b, 108c) zum Ausführen des Digitalinhalts (102) vor Empfang des Digitalinhalts enthält; der Client ist außerdem zum Extrahieren zusätzlicher Abhängigkeiten (108a) vom Deskriptor konfiguriert, wobei der Deskriptor Adressen für ein Paket enthält, das jeder der Abhängigkeiten (108a, 108b) und der zusätzlichen Abhängigkeiten (108a) entspricht, sodass der Client von den entsprechenden Adressen jedes Paket erhalten kann, **dadurch gekennzeichnet, dass** der Client Logik zum Bestimmen enthält, ob der Client (114; 118; 120) eine annehmbare Kapazität für alle Pakete hat.

15. System nach Anspruch 14, außerdem umfassend:
ein verteiltes Netz (112), über das der Server (110) und der Client (114; 118; 120) kommunizieren.

16. System nach Anspruch 14, worin der Client (114; 118; 120) eine mobile elektronische Einrichtung ist.

17. System nach Anspruch 14, worin die Logik zum Bestimmen, ob der Client (114; 118; 120) eine annehmbare Kapazität für alle Pakete hat, enthält:
Logik zum Erzeugen einer Fehlermeldung, die anzeigt, dass der Client (114; 118; 120) nicht fähig ist, den Digitalinhalt (102) zu präsentieren.

## Revendications

1. Procédé pour télécharger un contenu numérique, comprenant:
l'identification de données (100; 100a) décrivant le contenu numérique (102);
l'identification d'une dépendance (108b, 108c) relative à l'exécution du contenu numérique (102) à partir des données (100, 100a) décrivant le contenu numérique (102);
le fait de déterminer si une première entité téléchargeable (106a, 106b) associée à la dépendance (108b, 108c) relative à l'exécution du contenu numérique est disponible localement;
le fait de déterminer si une quelconque dépendance additionnelle (108a) relative à l'exécution du contenu numérique (102) est nécessaire;
si la première entité (106a, 106b) n'est pas disponible localement et qu'une quelconque dépendance additionnelle (108a) est nécessaire, l'obtention à la fois de la première entité (106a, 106b) à partir d'une adresse fournie par les données décrivant le contenu numérique et d'une entité téléchargeable additionnelle (106f) associée à la quelconque dépendance additionnelle (108a); et
**caractérisé par**:
le fait de déterminer si un récepteur (114; 118; 120) du contenu numérique présente une capacité acceptable pour la première entité (106a, 106b) et pour l'entité additionnelle (106f) associée à la quelconque dépendance additionnelle (108a).

2. Procédé selon la revendication 1, dans lequel l'exécution du contenu numérique (102) inclut la présentation du contenu numérique.

3. Procédé selon la revendication 1, dans lequel l'opération de procédé d'obtention à la fois de la première entité (106a, 106b) à partir d'une adresse fournie par les données (100; 100a) décrivant le contenu numérique et d'une entité additionnelle (106f) associée à la quelconque dépendance additionnelle (108a) inclut:
l'identification d'une adresse pour obtenir l'entité additionnelle (106f) associée à la quelconque dépendance additionnelle (108a) à partir de données décrivant l'entité additionnelle associée à la quelconque dépendance additionnelle (100b).

4. Procédé selon la revendication 1, comprenant en outre:
l'identification d'un moyen de localisation correspondant à l'adresse.

5. Procédé selon la revendication 1, dans lequel, si le récepteur (114; 118; 120) du contenu numérique ne dispose pas d'une capacité acceptable pour la première entité, alors le procédé inclut:
la génération d'un message d'erreur.

6. Procédé selon la revendication 1, dans lequel les données (100; 100a; 122) décrivant le contenu numérique sont un descripteur contenant une liste de dépendances.

7. Procédé selon la revendication 1, comprenant en outre:
l'initialisation (162) de vecteurs sélectionnés parmi le groupe constitué par un vecteur de dépendances, un vecteur de descripteurs et un vecteur de dépendances en défaillance, dans lequel le vecteur de dépendances inclut à la fois la dépendance et la quelconque dépendance additionnelle;
l'acquisition (168) d'un descripteur pour chaque entité; et
l'extraction de descripteurs additionnels à partir du descripteur pour chaque entité.

8. Support lisible par ordinateur comportant des instructions de programme pour décharger un contenu numérique, comprenant:
des instructions de programme pour identifier des données (100; 100a) décrivant le contenu numérique (102);
des instructions de programme pour identifier une dépendance (108b, 108c) rapportée à l'exécution du contenu numérique (102) à partir des données décrivant le contenu numérique;
des instructions de programme pour déterminer si une première entité téléchargeable (106a, 106b) associée à la dépendance (108b, 108c) rapportée à l'exécution du contenu numérique est localement disponible;
des instructions de programme pour déterminer si une quelconque dépendance additionnelle (108a) rapportée à l'exécution du contenu numérique est nécessaire;
des instructions de programme pour obtenir à la fois la première entité téléchargeable (106a, 106b) à partir d'une adresse fournie par les données décrivant le contenu numérique et une entité additionnelle téléchargeable (106f) associée à la quelconque dépendance additionnelle (108a), si la première entité téléchargeable n'est pas localement disponible et qu'une quelconque dépendance additionnelle est nécessaire; et
**caractérisé par**:
des instructions de programme pour déterminer si un récepteur (114; 118; 120) du contenu numérique présente une capacité acceptable pour la première entité téléchargeable (106a, 106b) et l'entité additionnelle téléchargeable (106f) associée à la quelconque dépendance additionnelle (108a).

9. Support lisible par ordinateur selon la revendication 8, dans lequel les instructions de programme pour obtenir à la fois la première entité téléchargeable (106a, 106b) à partir d'une adresse fournie par les données (100; 100a; 122) décrivant le contenu numérique et une entité additionnelle téléchargeable (106f) associée à la quelconque dépendance additionnelle (108a) qui inclut
des instructions de programme pour identifier une adresse pour obtenir l'entité téléchargeable (106a) associée la quelconque dépendance additionnelle à partir de données décrivant l'entité additionnelle téléchargeable associée à la quelconque dépendance additionnelle (100b).

10. Support lisible par ordinateur selon la revendication 8, comprenant en outre:
des instructions de programme pour identifier un moyen de localisation correspondant à l'adresse.

11. Support lisible par ordinateur selon la revendication 8, dans lequel, si le récepteur (114; 118; 120) du contenu numérique ne dispose pas d'une capacité acceptable pour la première entité téléchargeable, alors le support lisible par ordinateur inclut:
des instructions de programme pour générer un message d'erreur.

12. Support lisible par ordinateur selon la revendication 8, dans lequel les données (100; 100a; 122) décrivant le contenu numérique sont un descripteur contenant une liste de dépendances.

13. Support lisible par ordinateur selon la revendication 8, comprenant en outre:
des instructions de programme pour initialiser (162) des vecteurs sélectionnés parmi le groupe constitué par un vecteur de dépendances, un vecteur de descripteurs et un vecteur de dépendances en défaillance, dans lequel le vecteur de dépendances inclut à la fois la dépendance et la quelconque dépendance additionnelle;
des instructions de programme pour acquérir (168) un descripteur pour chaque entité téléchargeable; et
des instructions de programme pour extraire des descripteurs additionnels à partir du descripteur pour chaque entité téléchargeable.

14. Un système comprenant:
un serveur (110) configuré pour fournir un contenu numérique (102);
un client (114; 118; 120) configuré pour recevoir le contenu numérique (102) en provenance du serveur (110); le client étant configuré pour identifier un descripteur (100a) contenant une liste de dépendances (108b, 108c) pour exécuter le contenu numérique (102) avant réception du contenu numérique, le client étant en outre configuré pour extraire des dépendances additionnelles (108a) à partir du descripteur, le descripteur incluant des adresses pour un module correspondant à chacune des dépendances (108a, 108b) et aux dépendances additionnelles (108a) de telle sorte que le client puisse obtenir chaque module à partir des adresses correspondantes, **caractérisé par le fait que** le client inclut une logique pour déterminer si le client (114; 118; 120) présente une capacité acceptable pour tous les modules.

15. Système selon la revendication 14, comprenant en outre:
un réseau distribué (112) sur lequel le serveur (110) et le client (114; 118; 120) communiquent.

16. Système selon la revendication 14, dans lequel le client (114; 118; 120) est un dispositif électronique mobile.

17. Système selon la revendication 14, dans lequel la logique pour déterminer si le client (114; 118; 120) présente une capacité acceptable pour tous les modules inclut:
une logique pour générer un message d'erreur indiquant que le client (114; 118; 120) est inapte à présenter le contenu numérique (102).
